# EUROPEAN PATENT SPECIFICATION

(11) **EP 0 662 449 B1**
(45) Date of publication and mention of the grant of the patent: **19.04.2000**
(21) Application number: 95300090.8
(22) Date of filing: 09.01.1995
(51) Int. Cl.: C01B 31/02, C07C 39/17

(54) **A process for the purification of fullerenes**
Verfahren zur Reinigung von Fullerenen
Procédé de purification de fullerènes

(30) Priority: 09.01.1994 JP 1220894; 02.05.1994 JP 11595494
(43) Date of publication of application: 12.07.1995
(73) Proprietor: RESEARCH DEVELOPMENT CORPORATION OF JAPAN, Kawaguchi-shi, Saitama (JP); MITSUBISHI CHEMICAL CORPORATION, Chiyoda-ku, Tokyo 100-0005 (JP)
(72) Inventor: Shinkai, Seiji, Fukuoka-shi, Fukuoka (JP); Suzuki, Tsuyoshi, Higashikushihara, Kurume-shi, Fukuoka (JP); Nakashima, Kazuaki, Chikushino-shi, Fukuoka (JP)
(74) Representative: Matthews, Derek Peter

(56) References cited:
- RECUEIL DES TRAVAUX CHIMIQUES DES PAYS-BAS, vol.111, no.12, December 1992, DEN HAAG NL pages 531 - 532 R. M. WILLIAMS ET AL.
- NATURE, vol.368, no.6468, 17 March 1994, LONDON GB pages 229 - 231 J. L. ATWOOD ET AL.
- CHEMISTRY LETTERS, no.4, April 1994, TOKYO JP pages 699 - 702 T. SUZUKI ET AL.
- JOURNAL OF THE AMERICAN CHEMICAL SOCIETY, vol.116, no.15, 27 July 1994, WASHINGTON, DC US pages 6965 - 6966 R. M. WILLIAMS ET AL.

## Description

The present invention relates to a process for the purification of fullerenes, by which a specific fullerene, such as C₆₀, can be selectively obtained from a mixture of fullerenes.

### The Prior Art

Fullerenes are carbon-clustered spherical or ellipsoidal shell molecules typified by C₆₀. The molecules have had a great impact on the world of science since the discovery thereof by Kroto and Smalley in 1985, and have recently attracted considerable attention in various fields of industry.

In particular, in 1990 Kratshmer and Hoffman established a method for the mass synthesis of C₆₀, a spherical molecule in the shape of a soccerball consisting of 60 carbon atoms. Since then, the chemistry of C₆₀ has developed in various aspects, not only as a single molecule but also in terms of molecular assemblies and derivatives therefrom. In 1991, the discovery by Hebard that a thin film of C₆₀ doped with potassium exhibits superconductivity at Tc=18°K received considerable public attention. A paper published in 1993 reported that a C₆₀-derivative exhibits an activity suppressing effect against AIDS. Thus, there are growing expectations for fullerene applications.

Currently fullerenes are provided in the form of soot obtained by the laser vaporization or arc discharging of carbon materials such as graphite. The soot is a mixture of the preponderant component, C₆₀, and some other bigger fullerenes such as C₇₀. There is therefore a need for efficient purification of fullerenes, in order to obtain a desired fullerene at a high purity in a high yield.

The best known conventional method for the purification of fullerenes is a chromatographic one using various types of stationary phases. However, this method is not satisfactory. For example, the use of neutral alumina as the stationary phase is disadvantageous in that an extremely large amount of hexane is needed as the developing agent because the fullerene mixture has a low solubility in hexane. When activated charcoal is used as the stationary phase, the C₆₀ adsorbed onto the charcoal is difficult to recover.

By nature, chromatographic methods suffer from the drawback that they cannot be scaled up so as to be suitable for use in purification on an industrial scale. In addition it is said that the rate of recovery of fullerenes by chromatographic methods is at most 60 percent.

Thus, fullerenes are currently very expensive since no simple and efficient process has yet been established for the purification thereof. This has been a severe obstacle to further studies on fullerenes and development of fullerene applications.

### Summary of the Invention

After extensive studies to overcome the above-mentioned disadvantages, the present inventors have accomplished a novel process by which fullerenes can be efficiently purified on a large scale utilizing "calixarenes".

Calixarenes to be used in the present invention are cyclic or ring oligomers composed of plural phenol units linked by methylene bridges, as shown by the formula(1) below, in which n is generally an integer of 3 to 8 and X is selected from various functional groups and atomic groups.

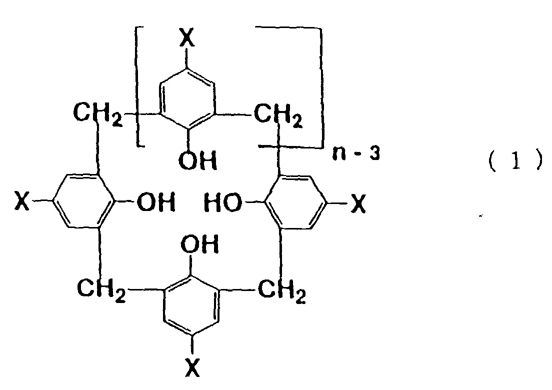

Calixarenes are capable of including atoms or molecules in the cavities formed by the rings, where the sizes and shapes of the cavities can be varied by, for example, changing the number of the phenol units. Thus , calixarenes have played important roles as a host molecule in host-guest chemistry. Recently, studies have also been made on applications utilizing the characteristic features of calixarenes.

The present invention is based on the inclusion capability of calixarenes: A calixarene is used which has a ring size adaptable for the molecular size of a desired fullerene so as to form a calixarene/fullerene complex, from which the fullerene is later separated for recovery. For example, calixarenes having eight phenol units, i.e. calix[8]arene, are suitably used for separation of C₆₀.

Thus, according to the concept on which the present invention is based, fullerenes can be purified by adding a calixarene to a solution of a fullerene mixture so as to form a calixarene/fullerene complex and decomposing the complex to recover a specific fullerene.

In conducting the process based on the present invention, although the solution of the fullerene mixture is most generally one in an organic solvent (a non-aqueous solvent), an aqueous solution may be employed. For example, a water-soluble calixarene, which can be obtained by substituting appropriate functional groups for the OH or the R's in the formula(1), is used to include a fullerene therein to form a calixarene/fullerene complex in an aqueous solution. Then, for decomposing the complex, the aqueous solution is subjected to a filtration, where the filtrate containing the complex is transferred into an organic solvent phase to separate the fullerene for recovery.

However, the most preferred embodiment of the present invention is based on the discovery that some calix[8]arenes form a complex specifically with C₆₀ in a benzene-type solvent, which complex precipitates in the solvent, but no precipitations occur with other fullerene compounds.

As to the selective formation of complexes of calix[8]arenes with C₆₀ reference is made to 'Recueil des Travaux Chimique des Pays-Bas', 111, pp 531-532, 1992.

Thus, according to the present invention, there is provided a process for purifying fullerenes which comprises a first step of adding a calix[8]arene expressed by the general formula(2) given below, in which R represents an alkyl group having 1 to 5 carbon atoms, to a solution obtained by dissolving a mixture of fullerenes containing C₆₀ in a benzene-type solvent, so as to precipitate C₆₀ as a complex with the calix[8]arene, and a second step of decomposing the precipitated complex to separate and recover C₆₀.

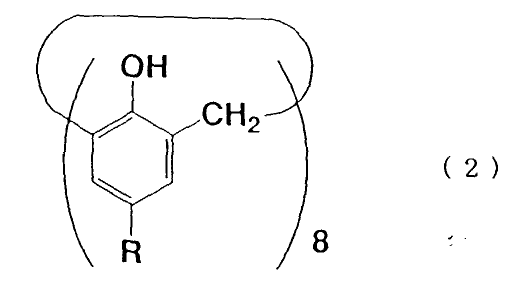

In the formula(2) , R represents an alkyl group having 1 to five carbon atoms, preferably an alkyl group having 2, 3 or 4 carbon atoms, with isopropyl group and t-butyl group being most preferred. Thus, the most preferred calixarene to be used in the present invention is p-isopropylcalix[8]arene, as expressed by the formula(3) or (4), and p-t-butylcalix[8]arene, as expressed by the formula (5) or (6).

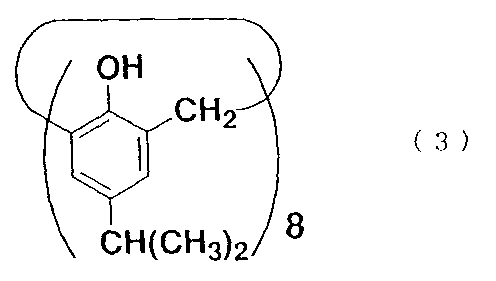

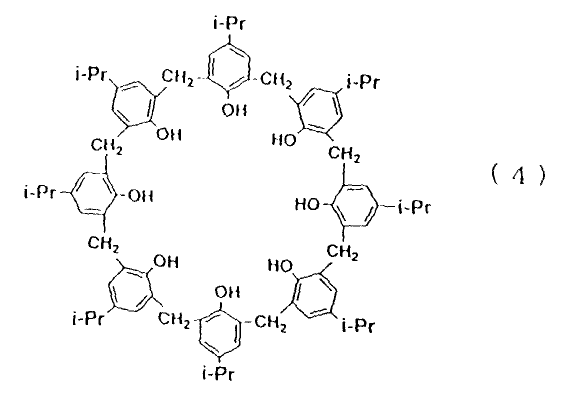

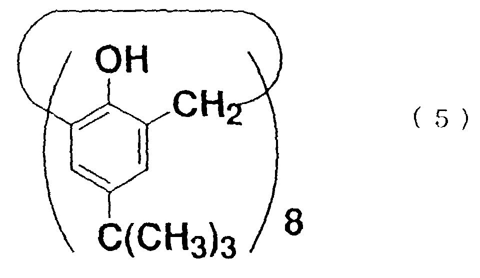

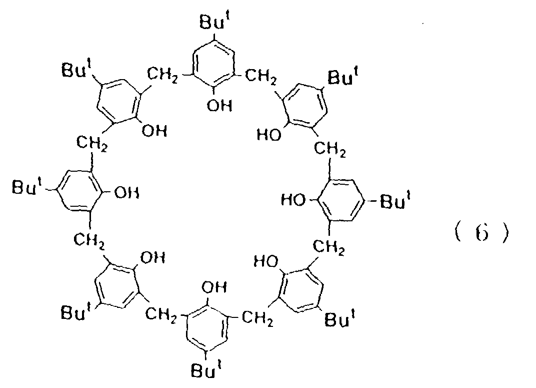

P-alkylcalix[8]arenes as expressed by the formula (2) and to be used in the present invention can be prepared by a method as described in the literature (for example, Gutsche et al., J. Am. Chem. Soc., 103, 3782(1981)). Thus, the dehydration/condensation reaction is carried out between p-alkylphenol and formaldehyde in the presence of potassium hydroxide under a xylene reflux to produce the corresponding calixarene at a yield of 40 to 90%. For example, p-isopropylcalix[8]arene is produced from p-isopropylphenol by such method at a yield of 80 - 85%.

As the benzene-type solvent to be used for the precipitation in the first step of the process of the present invention there can be exemplified such solvents as benzene, toluene, xylene and ethylbenzene, with benzene and toluene being preferred. In the case of p-t-butylcalix[8]arene, it is preferred to use toluene, while the use of benzene is somewhat disadvantageous in terms of C₆₀ purification because not only C₆₀ but also C₇₀ are precipitated as complexes in benzene.

The use of p-isopropylcalix[8]arene in the process of the invention is advantageous in that C₆₀ is selectively precipitated in the form of the complex both in toluene and in benzene, with the precipitation rate being somewhat accelerated in benzene. The use of p-isopropylcalix[8]arene has a further advantage in that less volume of the solvent (chloroform) needs to be used in the second step for decomposing the complex formed in the first step: This is because there exists a great difference in the solubility in benzene between the complex and C₆₀, resulting in an efficient precipitation of C₆₀ and, accordingly, high recovery thereof.

There is no restriction on the amount of the calix[8]arene to be used in the first step of the present invention. Generally the calixarene is used in such an amount as 0.1 to 100 times in moles, preferably 1 to 2 times in moles, relative to the amount of C₆₀ contained in the fullerene mixture.

While there is no specific restriction on the amount of the benzene-type solvent to be used, the solvent is preferably used in the range of 2.8 to 28 litre per gram of C₆₀ and 0.5 to 5 litre per gram of the calix[8]arene. The use of the solvent in a smaller amount may tend to form depositions of C₆₀ and/or the calix[8]arene, thereby leading to failure in the formation of the calixarene/C₆₀ complex precipitates of a homogeneous composition. On the other hand the use of a higher amount of solvent may prolong the time for the formation of the calixarene/C₆₀ complex. It is to be noted that the first step for the precipitate formation can be carried out at room temperature.

In the process of the present invention, a complex formation reaction occurs between C₆₀ and calix[8]arene dissolved in a benzene-type solvent, and the resultant complex precipitates in the solvent. The mechanism of this phenomenon is thought to be as follows: The calixarene is dissolved in the benzene-type solvent, with its OH groups being intermolecularly hydrogen-bonded with one another in a cyclic array. However, when C₆₀ is included in the calixarene, the OH groups are undone from one another so as to be exposed in the solvent, resulting in the precipitation of the C₆₀/calixarene complex presumably due to occurrence of the interactions of the OH groups between the complexes and/or the change in the solubility of the complex.

According to the preferred embodiment of the present invention, C₆₀ of an extremely high purity can be obtained by adding to the first step (for the formation of the complex precipitate) the operation of dissolving the precipitate and then regenerating the precipitate.

Thus, the precipitate formed by the addition of the calix[8]arene in the first step of the process of the present invention is once separated from the benzene-type solvent. This separation may be accomplished in any manner, such as by filtration or centrifugation. The precipitate thus separated is again added to a benzene-type solvent, followed by heating to a temperature of 50 to 100°C. This results in dissolving the precipitate (the complex) in the solvent in the form of C₆₀ and calix[8]arene reverted from the complex. Upon cooling the resultant solution back to room temperature, a precipitate is again formed.

Such operation consisting of the separation of the precipitate, the heating of the separated precipitate in a benzene-type solvent, and the cooling back to room temperature is conducted repeatedly as required. Then, the final precipitate is subjected to the second step of the process of the present invention. While the purity of the C₆₀ obtained by one cycle of such operation depends upon the composition of the fullerene mixture as the raw material, repeated cycles of the operation makes it possible to secure C₆₀ having a purity of almost 100%.

The filtrate formed in the first step of the process of the invention may contain higher fullerenes such as C₇₀, which, if desired, can be recovered by an appropriate conventional method, e.g. by a chromatographic method.

Through a specific combination of the calixarene and the solvent, it is possible to precipitate plural fullerenes simultaneously in the first step of the process. For example, use of p-ethylcalix[8]arene, where R is ethyl in the formula(2), in combination with benzene makes it possible to co-precipitate C₆₀ and C₇₀. In such system higher fullerenes other than C₆₀ and C₇₀ may be recovered from the precipitates of C₆₀ and C₇₀ in the first step of the process of the invention.

The process for the purification of fullerenes of the present invention includes the second step where the complex formed as a precipitate in the first step is decomposed for the separation and recovery of C₆₀.

According to the preferred embodiment of the present invention, the second step comprises isolating or separating from the benzene-type solvent the precipitate (the C₆₀/calix[8]arene complex) formed in the first step, in which the separation may be carried out by, for example, filtration or centrifugation, and adding a chlorine-containing solvent to the precipitate to make the precipitate dissolve in the solvent. This results in the decomposition of the C₆₀/calix[8]arene complex, thereby causing the precipitation of C₆₀ with the calix[8]arene being dissolved in the solvent. The C₆₀ is recovered in a high purity.

As the chlorine-containing solvent to be used in the second step of the process of the invention there can be exemplified such solvents as chloroform, methylene chloride, carbon tetrachloride and tetrachloro ethane. Preferred solvents are chloroform and methylene chloride because each has a large difference between its ability to dissolve C₆₀ and its ability to dissolve calix[8]arene, thereby enabling efficient precipitation of C₆₀. Particularly, use of chloroform is advantageous in that the decomposition of the complex proceeds smoothly even at room temperature. When methylene chloride is used, some degree of system heating is required.

There is no specific restriction on the amount of the chlorine-containing solvent to be used in the second step of the process of the invention. With chloroform, it is preferred to use the solvent in an amount of 100 to 300 litre per gram of the calix[8]arene contained in the precipitate. A smaller amount of the solvent may lead to the contamination of C₆₀ with the calix[8]arene, while use of a larger amount of the solvent tends to lower the recovery of C₆₀.

The filtrate formed in the second step of the process contains the calix[8]arene at high purity, possibly with a small amount of C₆₀. They can be recovered for reuse, by removing the solvent.

For recovering C₆₀, the precipitate of the complex formed in the first step may alternatively be decomposed by any appropriate method other than by the addition of the chlorine-containing solvent so as to cause the fullerene precipitate. Such methods include heating the complex in the toluene so as to re-dissolve C₆₀ and calix[8]arene, followed by the extraction of the calix[8]arene with an alkaline aqueous solution before the regeneration of the precipitate for the recovery of C₆₀. Alternatively, the complex may be heated in the solid state in order to recover C₆₀ by means of gasification decomposition or fractional sublimation.

As can be seen from the foregoing, the process of the present invention makes it possible to purify a specific fullerene, particularly C₆₀, with a high purity or recovery, from a mixture of C₆₀, C₇₀ and other fullerenes. The process of the invention is also advantageous in that the amount of solvents used is very small. The process of the present invention does not require any sophisticated equipment and hence can easily be scaled up to a large scale substantially maintaining the laboratory data, thereby making the process suitable for use in industrial purification of fullerenes.

The present invention will be further illustrated by the following examples, which do not restrict the scope of the invention.

In the examples given below, there was used a fullerene mixture containing 72 weight % of C₆₀ and 13 weight % of C₇₀. The purity of C₆₀ is expressed in terms of 100 x C₆₀ / (C₆₀+C₇₀) (by weight %) and was determined by HPLC (high performance liquid chromatography).

### EXAMPLE 1

A fullerene mixture (200mg) containing 144mg ( 0.2mmol) of C₆₀ was dissolved in 60ml of toluene. The solution was added with a solution of 389mg (0.3mmol) of p-t-butylcalix[8]arene in 200ml of toluene. When the resultant mixture was stirred at room temperature, precipitate formation was observed to start in about three hours. After stirring was conducted for fifteen hours, the system was subjected to filtration, by which 400mg (purity of 96.0%) of the precipitate was obtained.

The precipitate was added with 200ml of toluene, followed by heating to 100°C. The resulting solution was cooled to room temperature and stirred for fifteen hours. On subjecting the system to filtration, there was obtained 353mg of precipitate with 99.0% purity. The same operations (i.e., solvent addition to the precipitate, heating to 100°C, cooling to room temperature and filtration) were repeated, whereby there was obtained 353mg of the precipitate with a purity of 99.8%.

The result of elemental analysis (C:87.96%, H:5.79%) showed that the precipitate is a 1:1 complex of C₆₀ and p-t-butylcalix[8]arene.

The precipitate thus obtained was added with 30ml of chloroform, followed by stirring for one hour at room temperature. When the system was subjected to filtration, there was obtained 100mg of a black solid, which was identified as being C₆₀ through carbon-13NMR analysis. The purity of the C₆₀ was determined to be 99.8% by HPLC. The recovery of the C₆₀ was 71%.

The total amounts of the solvents used in obtaining the C₆₀ with the high purity were very small, i.e., about 860ml for toluene and about 300ml for chloroform. The values are extremely small as compared with those in the case of a conventional method. For example, they are about one-fifth the total amounts in the case of the method using neutral alumina.

### EXAMPLE 2

A fullerene mixture (200mg) containing 144mg (0.2mmol) of C₆₀ was dissolved in 60ml of toluene. The solution was added with a solution of 389mg (0.3mmol) of p-t-butylcalix[8]arene in 200ml of toluene. When the resultant mixture was stirred at room temperature, precipitate formation was observed to start in about three hours. After stirring was conducted for fifteen hours, the system was subjected to filtration, by which 400mg (purity of 96.0%) of the precipitate was obtained.

The precipitate thus obtained was added with 30ml of methylene chloride, followed by stirring for two hours at 40°C under reflux. When the system was subjected to filtration, there was obtained 125mg of a black solid. The purity of the C₆₀ was determined to be 96.0% by HPLC. The recovery of the C₆₀ was 83%, and the amount of the solvents used was only 290ml.

### EXAMPLE 3

A fullerene mixture (200mg) containing 144mg (0.2mmol) of C₆₀ was dissolved in 100ml of benzene. The solution was added with a solution of 389mg (0.3mmol) of p-t-butylcalix[8]arene in 100ml of benzene. When the resultant mixture was stirred at room temperature, precipitate formation was observed to start in about one hour. After stirring was conducted for five hours, the system was subjected to filtration, by which 427mg (purity of 90.0%) of the precipitate was obtained.

The precipitate thus obtained was added with 30ml of chloroform, followed by stirring for one hour at room temperature. When the system was subjected to filtration, there was obtained 130mg of a black solid. The purity of the C₆₀ was determined to be 99.8% by HPLC.

### EXAMPLE 4

A fullerene mixture (200mg) containing 144mg (0.2mmol) of C₆₀ was dissolved in 60ml of toluene. The solution was added with a solution of 356mg (0.3mmol) of p-isopropylcalix[8]arene in 150ml of toluene. When the resultant mixture was stirred at room temperature, precipitate formation was observed to start in about six hours. After stirring was conducted for thirty hours, the system was subjected to filtration, by which 880mg (purity of 96.0%) of the precipitate was obtained.

The precipitate thus obtained was added with 30ml of chloroform, followed by stirring for one hour at room temperature. When the system was subjected to filtration, there was obtained 135mg of a black solid. The purity of the C₆₀ was determined to be 96.0% by HPLC. The recovery of the C₆₀ was 90%.

### EXAMPLE 5

A fullerene mixture (200mg) containing 144mg (0.2mmol) of C₆₀ was dissolved in 100ml of benzene. The solution was added with a solution of 356mg (0.3mmol) of p-isopropylcalix[8]arene in 100ml of benzene. When the resultant mixture was stirred at room temperature, precipitate formation was observed to start in about one hour. After stirring was conducted for five hours, the system was subjected to filtration, by which 380mg (purity of 96.0%) of the precipitate was obtained.

The precipitate was added with 100ml of benzene, followed by heating to 80°C. The resulting solution was cooled to room temperature and stirred for five hours. On subjecting the system to filtration, there was obtained 335mg of precipitate with 99.0% purity. The same operation (i.e., solvent addition to the precipitate, heating to 80°C, cooling to room temperature and filtration) were repeated, whereby there was obtained precipitate with purity of 99.8%.

The precipitate thus obtained was added with 10ml of chloroform, followed by stirring for one hour at room temperature. When the system was subjected to filtration, there was obtained 109mg of a black solid. The purity of the C₆₀ was determined to be 99.8% by HPLC. The recovery of the C₆₀ was 75%.

### EXAMPLE 6

A fullerene mixture (200mg) containing 144mg (0.2mmol) of C₆₀ was dissolved in 60ml of benzene. The solution was added with a solution of 322mg (0.3mmol) of p-ethylcalix[8]arene in 200ml of benzene. When the resultant mixture was stirred at room temperature, precipitate formation was observed to start in about one hour. After stirring was conducted for five hours, the system was subjected to filtration, by which 414mg (purity of 92.0%) of the precipitate was obtained.

The precipitate thus obtained was added with 50ml of chloroform, followed by stirring for one hour at room temperature. When the system was subjected to filtration, there was obtained 125mg of a black solid. The purity of the C₆₀ was determined to be 92.0% by HPLC. The recovery of the C₆₀ was 80%.

## Claims

1. A process for purifying fullerenes which comprises adding a calixarene to a solution of a fullerene mixture so as to form a calixarene/fullerene complex and decomposing the mixture to recover a specific fullerene.

2. A process for purifying fullerenes which comprises a first step of adding a calix[8]arene expressed by the general formula given below, in which R represents an alkyl group having 1 to 5 carbon atoms, to a solution of a mixture of fullerenes containing C₆₀ in a benzene-type solvent so as to precipitate C₆₀ as a complex with the calix[8]arene, and a second step of decomposing the precipitated complex to separate and recover C₆₀.

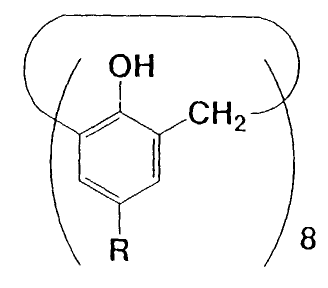

3. The process for purifying fullerenes as claimed in claim 2, in which the first step further includes separating the precipitate of the complex from the benzene-type solvent, adding said complex to a benzene-type solvent followed by heating to a temperature of 50 to 100°C so as to dissolve the complex in the solvent, and then cooling the resultant solution to room temperature again to precipitate the complex, such separation of the precipitate, heating of the separated precipitate in a benzene-type solvent and cooling of the solution to room temperature being conducted repeatedly as required, prior to providing a final precipitate to the second step.

4. The process for purifying fullerenes as claimed in claim 2 or claim 3, in which the second step comprises separating from the benzene-type solvent the precipitate of the complex formed in the first step, and adding a chlorine-containing solvent to the separated precipitate to cause the precipitation of C₆₀ with the calix[8]arene being dissolved in the chlorine-containing solvent.

5. The process for purifying fullerenes as claimed in claim 2 or claim 3, in which the benzene-type solvent is toluene or benzene.

6. The process for purifying fullerenes as claimed in claim 4, in which the benzene-type solvent is toluene or benzene, and the chlorine-containing solvent is chloroform or methylene chloride.

7. The process for purifying fullerenes as claimed in claim 2 or claim 3, in which the calix[8]arene is one where R is an alkyl group having 2, 3 or 4 carbon atoms.

8. The process for purifying fullerenes as claimed in claim 4, in which the calix[8]arene is one where R is an alkyl group having 2, 3 or 4 carbon atoms, and the chlorine-containing solvent is chloroform or methylene chloride.

9. The process for purifying fullerenes as claimed in claim 2 or claim 3, in which the calix[8]arene is p-isopropylcalix[8]arene with R being isopropyl group, and the benzene-type solvent is benzene or toluene.

10. The process for purifying fullerenes as claimed in claim 4, in which the calix[8]arene is p-isopropylcalix[8]arene with R being isopropyl group, the benzene-type solvent is benzene or toluene, and the chlorine containing solvent is chloroform.

11. The process for purifying fullerenes as claimed in claim 2 or claim 3, in which the calix[8]arene is p-t-butylcalix[8]arene with R being t-butyl group, and the benzene-type solvent is toluene.

12. The process for purifying fullerenes as claimed in claim 4, in which the calix[8]arene is p-t-butylcalix[8]arene with R being t-butyl group, and the benzene-type solvent is toluene, and the chlorine-containing solvent is chloroform.

13. The process for purifying fullerenes as claimed in claim 2 or claim 3, in which the calix[8]arene is p-ethylcalix[8]arene with R being ethyl group, and the benzene-type solvent is benzene.

14. The process for purifying fullerenes as claimed in claim 4, in which the calix[8]arene in p-ethylcalix[8]arene with R being ethyl group, and the benzene-type solvent is benzene, and the chlorine-containing solvent is chloroform.

## Patentansprüche

1. Ein Verfahren zur Reinigung von Fullerenen, das die Zugabe eines Calixarens zu einer Lösung einer Fulleren-Mischung, um einen Calixaren-Fulleren-Komplex zu bilden, und die Zersetzung der Mischung, um ein spezielles Fulleren zu gewinnen, umfaßt.

2. Ein Verfahren zur Reinigung von Fullerenen, das als einen ersten Schritt die Zugabe eines Calix[8]arens, dargestellt durch die nachstehend angegebene allgemeine Formel, worin R eine Alkylgruppe mit 1 bis 5 Kohlenstoffatomen bedeutet, zu einer Lösung einer Mischung aus Fullerenen, die C₆₀ enthält, in einem benzolartigen Lösungsmittel, um C₆₀ als einen Komplex mit dem Calix[8]aren auszufällen, und als einen zweiten Schritt die Zersetzung des ausgefällten Komplexes, um C₆₀ abzutrennen und zu gewinnen, umfaßt.

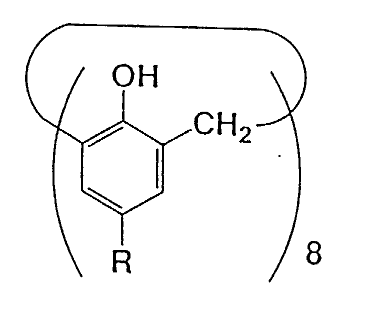

3. Das wie in Anspruch 2 beanspruchte Verfahren zur Reinigung von Fullerenen, bei dem der erste Schritt ferner die Abtrennung des Komplex-Niederschlags von dem benzolartigen Lösungsmittel, die Zugabe des Komplexes zu einem benzolartigen Lösungsmittel, gefolgt von der Erwärmung auf eine Temperatur von 50 bis 100°C, um den Komplex in dem Lösungsmittel zu lösen, und anschließend das Abkühlen der resultierenden Lösung wieder auf Raumtemperatur, um den Komplex auszufällen, umfaßt, wobei eine solche Abtrennung des Niederschlages, Erwärmung des abgetrennten Niederschlags in einem benzolartigen Lösungsmittel und Abkühlung der Lösung auf Raumtemperatur nach Bedarf wiederholt durchgeführt werden, bevor ein endgültiger Niederschlag dem zweiten Schritt unterworfen wird.

4. Das wie in Anspruch 2 oder Anspruch 3 beanspruchte Verfahren zur Reinigung von Fullerenen, bei dem der zweite Schritt die Abtrennung des im ersten Schritt gebildeten Komplex-Niederschlags von dem benzolartigen Lösungsmittel und die Zugabe eines chlorhaltigen Lösungsmittels zu dem abgetrennten Niederschlag umfaßt, damit die Ausfällung von C₆₀ bewirkt wird, während das Calix[8]aren in dem chlorhaltigen Lösungsmittel gelöst ist.

5. Das wie in Anspruch 2 oder Anspruch 3 beanspruchte Verfahren zur Reinigung von Fullerenen, bei dem das benzolartige Lösungsmittel Toluol oder Benzol ist.

6. Das wie in Anspruch 4 beanspruchte Verfahren zur Reinigung von Fullerenen, bei dem das benzolartige Lösungsmittel Toluol oder Benzol ist und das chlorhaltige Lösungsmittel Chloroform oder Methylenchlorid ist.

7. Das wie in Anspruch 2 oder Anspruch 3 beanspruchte Verfahren zur Reinigung von Fullerenen, bei dem das Calix[8]aren eines ist, worin R eine Alkylgruppe mit 2, 3 oder 4 Kohlenstoffatomen ist.

8. Das wie in Anspruch 4 beanspruchte Verfahren zur Reinigung von Fullerenen, bei dem das Calix[8]aren eines ist, worin R eine Alkylgruppe mit 2, 3 oder 4 Kohlenstoffatomen ist, und das chlorhaltige Lösungsmittel Chloroform oder Methylenchlorid ist.

9. Das wie in Anspruch 2 oder Anspruch 3 beanspruchte Verfahren zur Reinigung von Fullerenen, bei dem das Calix[8]aren p-Isopropylcalix[8]aren ist, wobei R eine Isopropylgruppe ist, und das benzolartige Lösungsmittel Benzol oder Toluol ist.

10. Das wie in Anspruch 4 beanspruchte Verfahren zur Reinigung von Fullerenen, bei dem das Calix[8]aren p-Isopropylcalix[8]aren ist, wobei R eine Isopropylgruppe ist, das benzolartige Lösungsmittel Benzol oder Toluol ist und das chlorhaltige Lösungsmittel Chloroform ist.

11. Das wie in Anspruch 2 oder Anspruch 3 beanspruchte Verfahren zur Reinigung von Fullerenen, bei dem das Calix[8]aren p-t-Butylcalix[8]aren ist, wobei R eine t-Butylgruppe ist, und das benzolartige Lösungsmittel Toluol ist.

12. Das wie in Anspruch 4 beanspruchte Verfahren zur Reinigung von Fullerenen, bei dem das Calix[8]aren p-t-Butylcalix[8]aren ist, wobei R eine t-Butylgruppe ist, und das benzolartige Lösungsmittel Toluol ist und das chlorhaltige Lösungsmittel Chloroform ist.

13. Das wie in Anspruch 2 oder Anspruch 3 beanspruchte Verfahren zur Reinigung von Fullerenen, bei dem das Calix[8]aren p-Ethylcalix[8]aren ist, wobei R eine Ethylgruppe ist, und das benzolartige Lösungsmittel Benzol ist.

14. Das wie in Anspruch 4 beanspruchte Verfahren zur Reinigung von Fullerenen, bei dem das Calix[8]aren p-Ethylcalix[8]aren ist, wobei R eine Ethylgruppe ist, und das benzolartige Lösungsmittel Benzol ist und das chlorhaltige Lösungsmittel Chloroform ist.

## Revendications

1. Procédé de purification de fullerènes, qui comprend l'addition d'un calixarène à une solution d'un mélange de fullerènes afin de former un complexe calixarène/ fullerène et la décomposition du mélange pour récupérer un fullerène spécifique.

2. Procédé de purification de fullerènes, qui comprend une première étape consistant à ajouter un calix[8]arène représenté par la formule générale donnée ci-dessous, dans laquelle R représente un groupe alkyle ayant 1 à 5 atomes de carbone, à une solution d'un mélange de fullerènes contenant du C₆₀ dans un solvant benzénique afin de précipiter le C₆₀ sous forme d'un complexe avec le calix[8]arène, et une seconde étape consistant à décomposer le complexe précipité pour séparer et récupérer le C₆₀.

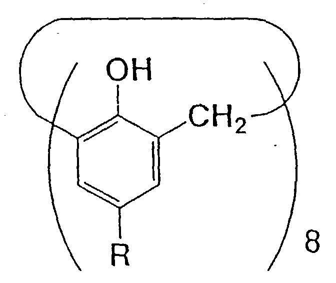

3. Procédé de purification de fullerènes tel que revendiqué dans la revendication 2, dans lequel la première étape consiste, de plus, à séparer le précipité constitué par le complexe du solvant benzénique, ajouter ledit complexe à un solvant benzénique, puis effectuer un chauffage à une température de 50° à 100°C afin de dissoudre le complexe dans le solvant, puis refroidir à nouveau la solution résultante à la température ambiante pour précipiter le complexe, ces opérations de séparation du précipité, de chauffage du précipité séparé dans un solvant benzénique et de refroidissement de la solution à la température ambiante étant conduites plusieurs fois, comme nécessaire, avant de fournir un précipité final à la seconde étape.

4. Procédé de purification de fullerènes tel que revendiqué dans la revendication 2 ou la revendication 3, dans lequel la seconde étape consiste à séparer du solvant benzénique le précipité constitué du complexe formé dans la première étape, et ajouter un solvant chloré au précipité séparé pour provoquer la précipitation du C₆₀, le calix[8]arène étant dissous dans le solvant chloré.

5. Procédé de purification de fullerènes tel que revendiqué dans la revendication 2 ou la revendication 3, dans lequel le solvant benzénique est le toluène ou le benzène.

6. Procédé de purification de fullerènes tel que revendiqué dans la revendication 4, dans lequel le solvant benzénique est le toluène ou le benzène, et le solvant chloré est le chloroforme ou le chlorure de méthylène.

7. Procédé de purification de fullerènes tel que revendiqué dans la revendication 2 ou la revendication 3, dans lequel le calix[8]arène est un tel composé dans lequel R est un groupe alkyle ayant 2, 3 ou 4 atomes de carbone.

8. Procédé de purification de fullerènes tel que revendiqué dans la revendication 4, dans lequel le calix[8]arène est un tel composé dans lequel R est un groupe alkyle ayant 2, 3 ou 4 atomes de carbone et le solvant chloré est le chloroforme ou le chlorure de méthylène.

9. Procédé de purification de fullerènes tel que revendiqué dans la revendication 2 ou la revendication 3, dans lequel le calix[8]arène est le p-isopropylcalix[8]arène, R étant un groupe isopropyle, et le solvant benzénique est le benzène ou le toluène.

10. Procédé de purification de fullerènes tel que revendiqué dans la revendication 4, dans lequel le calix[8]arène est le p-isopropylcalix[8]arène, R étant un groupe isopropyle, le solvant benzénique est le benzène ou le toluène, et le solvant chloré est le chloroforme.

11. Procédé de purification de fullerènes tel que revendiqué dans la revendication 2 ou la revendication 3, dans lequel le calix[8]arène est le *p*-*t*-butylcalix[8]arène, R étant un groupe *t*-butyle, et le solvant benzénique est le toluène.

12. Procédé de purification de fullerènes tel que revendiqué dans la revendication 4, dans lequel le calix[8]arène est le *p*-*t*-butylcalix[8]arène, R étant un groupe *t*-butyle, et le solvant benzénique est le toluène, et le solvant chloré est le chloroforme.

13. Procédé de purification de fullerènes tel que revendiqué dans la revendication 2 ou la revendication 3, dans lequel le calix[8]arène est le *p*-éthylcalix[8]arène, R étant un groupe éthyle, et le solvant benzénique est le benzène.

14. Procédé de purification de fullerènes tel que revendiqué dans la revendication 4, dans lequel le calix[8]arène est le *p*-éthylcalix[8]arène, R étant un groupe éthyle, et le solvant benzénique est le benzène, et le solvant chloré est le chloroforme.
